# EUROPÄISCHE PATENTANMELDUNG

(11) **EP 1 157 917 A2**
(43) Veröffentlichungstag der Anmeldung: **28.11.2001**
(21) Anmeldenummer: 01250170.6
(22) Anmeldetag: 16.05.2001
(51) Int. Cl.: B62D 55/12

(54) **Antriebsturas**

(30) Priorität: 24.05.2000 DE 10026084
(71) Anmelder: Demag Mobile Cranes GmbH, 66482 Zweibrücken (DE)
(72) Erfinder: Nöske, Ingo Dipl.-Ing., 66482 Zweibrücken (DE); Rutz, Werner Dipl.-Ing., 66851 Queidersbach (DE)
(74) Vertreter: Meissner, Peter E., Dipl.-Ing.

(57) **Zusammenfassung**

Die Erfindung betrifft einen Antriebsturas (1) für ein mehrere Laufrollen und eine Endloskette aufweisendes Raupenfahrwerk insbesondere für Krane, bestehend aus einem am Umfang mit Kettenzähnen versehenen Zahnkranz (3) und zwei auf beiden Seiten des Zahnkranzes angeordneten Laufkränzen, wobei infolge der Durchmesserdifferenz zwischen dem größeren Durchmesser des Fußkreises des Zahnkranzes und dem kleineren Durchmesser der Laufkränze je ein Spurkranz gebildet wird, die mit den Kettengliedern (4) der Endloskette zusammenwirken, wobei jedes Kettenglied zwei symmetrisch zur Mitte und im Abstand voneinander angeordnete, in Laufrichtung liegende Führungsstege aufweist und zwischen beiden Führungsstegen eine die beiden Stege verbindendes tiefer liegendes nockenartiges Element (5) angeordnet ist, das mit den Kettenzähnen des Antriebsturas kämmt. Jeder Laufkranz weist einen mit dem Zahnkranz (3) verbundenen Grundring (6,6') aufweist, auf dem drehbar ein Drehring (7,7') gelagert ist.

## Beschreibung

Die Erfindung betrifft einen Antriebsturas für ein mehrere Laufrollen und eine Endloskette aufweisendes Raupenfahrwerk insbesondere für Krane gemäß dem Oberbegriff des Anspruches 1.

Ein Antriebsturas der gattungsmäßigen Art ist aus der GB 1 602 143 bekannt. Dieser besteht aus einem am Umfang mit Kettenzähnen versehenen Zahnkranz und zwei auf beiden Seiten des Zahnkranzes angeordneten Laufkränzen, wobei infolge der Durchmesserdifferenz zwischen dem größeren Durchmesser des Fußkreises des Zahnkranzes und dem kleineren Außendurchmesser der Laufkränze je ein Spurkranz gebildet wird, die mit den Kettengliedern der Endloskette zusammenwirken. Die Endloskette besteht aus mehreren, eine Bodenplatte aufweisenden Kettengliedern mit zwei symmetrisch zur Mitte und im Abstand voneinander angeordneten, in Laufrichtung liegenden Führungsstegen. Zwischen den beiden Führungsstegen ist ein die beiden Stege verbindendes, tiefer liegendes nockenartiges Element angeordnet, das mit den Kettenzähnen des Antriebsturas kämmt. Die Teilkreisteilung, die sich ergibt aus Teilkreisdurchmesser geteilt durch die Anzahl der Kettenzähne, ist über den gesamten Umfang konstant. Nachteilig bei der bekannten Lösung ist, dass bei Bergabfahrten eines Kranes dieser gebremst werden muss. Dabei kommt es infolge des in allen Zahnlücken des Zahnkranzes vorhandenen gleichen Spiels zu einer Relationsverschiebung zwischen Antriebsturas und Endloskette, so dass der Kopfbereich des davon betroffenen Kettenzahnes auf der Flanke des nockenartigen Elementes aufläuft. Im ungünstigsten Fall schert der Kettenzahn die Flanke des nockenartigen Elementes ab, was zu einer weiteren Verschlechterung der Eingriffsbedingungen führt, die sich durch ein lautes Geräusch bemerkbar machen. Auch beim Wechsel von Vorwärts- auf Rückwärtsfahrt treten die geschilderten Probleme auf.

Aufgabe der Erfindung ist es, einen Antriebsturas der gattungsmäßigen Art so weiterzuentwickeln, dass die zuvor geschilderten Nachteile vermieden werden.

Diese Aufgabe wird gelöst durch einen Antriebsturas mit den Merkmalen des Anspruchs 1.

Nach der Lehre der Erfindung weist jeder Laufkranz einen mit dem Zahnkranz verbundenen Grundring auf, auf dem drehbar ein Drehring gelagert ist. Die Lagerung kann als Gleitlager oder Wälzlager ausgebildet sein. Vorteilhaft ist die Anordnung von Führungsringen. Beispielsweise wird von der Firma Busak + Shamban unter der Markenbezeichnung Luytex ein solcher Führungsring angeboten. Das Material ist ein Gewebeverbundwerkstoff aus Kunststoff-Feingewebe mit Zusatzschmiermitteln, der mit speziellen warmhärtenden Polyesterharzen imprägniert ist. Die Führungsringe sind mit einem Schrägschnitt versehen und weisen das erforderliche Spaltmaß Z auf. Zur Abweisung des Schmutzes sind sowohl auf der Innen- wie auf der Außenseite der Drehringe je eine Dichtung angeordnet. Vorzugsweise weist der Grundring auf der Außenseite einen Anlaufbund auf, gegen den sich der Drehring axial abstützen kann. Bei dieser Anordnung ist es erforderlich, dass die Laufkränze lösbar mit dem Zahnkranz verbunden sind, um eine Montage des Drehrings auf dem Grundring zu ermöglichen. Alternativ ist es auch möglich, den Anlaufbund lösbar am Grundring zu befestigen, so dass der Grundring integraler Bestandteil des Zahnkranzes sein kann.

Der Vorteil der vorgeschlagenen Ausbildung des Antriebsturas ist darin zu sehen, dass der Zahnkranz sich relativ zu den Drehringen einschließlich den Bodenplatten drehen kann. Dabei wird erreicht, dass die Bodenplatte immer richtig zum Antriebsturas steht und somit die Gefahr des Auflaufens des Zahnes des Antriebsturas auf die Kette verringert wird. Fahrversuche haben ergeben, dass so ausgerüstete Raupenfahrwerke sich laufruhiger verhalten als Raupenfahrwerke nach dem Stand der Technik.

Nachfolgend wird die Erfindung anhand des in der Zeichnung dargestellten Ausführungsbeispiels näher erläutert. Es zeigen:
- Figur 1: eine Seitenansicht eines erfindungsgemäß ausgebildeten Antriebsturas
- Figur 2: einen Halbschnitt in Richtung A-A in Figur 1
- Figur 3: das Detail X in Figur 2

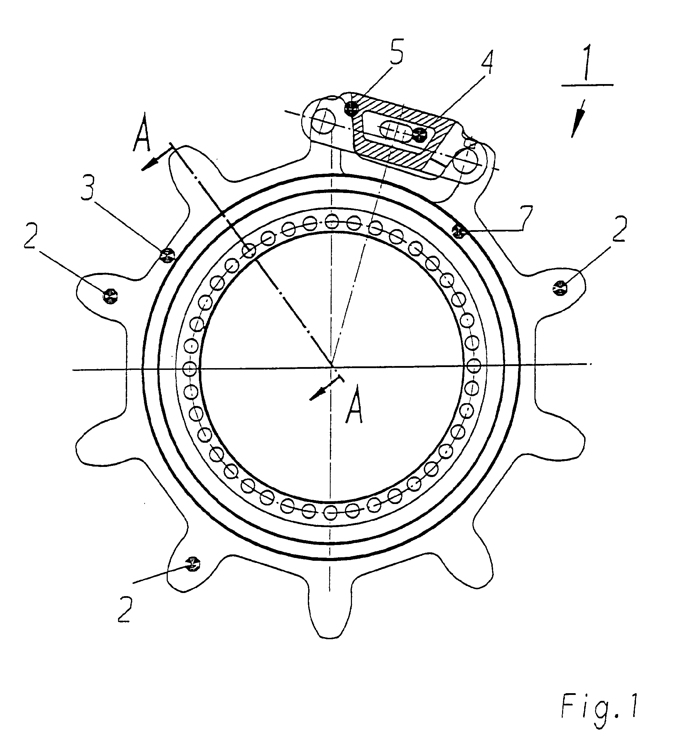

In Figur 1 ist in einer Seitenansicht ein erfindungsgemäß ausgebildeter Antriebsturas 1 dargestellt. Er besteht aus einem mit Kettenzähnen 2 versehenen Zahnkranz 3 und zwei auf beiden Seiten angeordneten Laufkränzen. Die Kettenzähne 2 des Antriebsturas 1 wirken mit einer Endloskette zusammen, von der hier lediglich nur ein Kettenglied 4 dargestellt ist. Beim Zusammenwirken kämmt das nockenartige Element 5 des Kettengliedes 4 mit den Kettenzähnen 2.

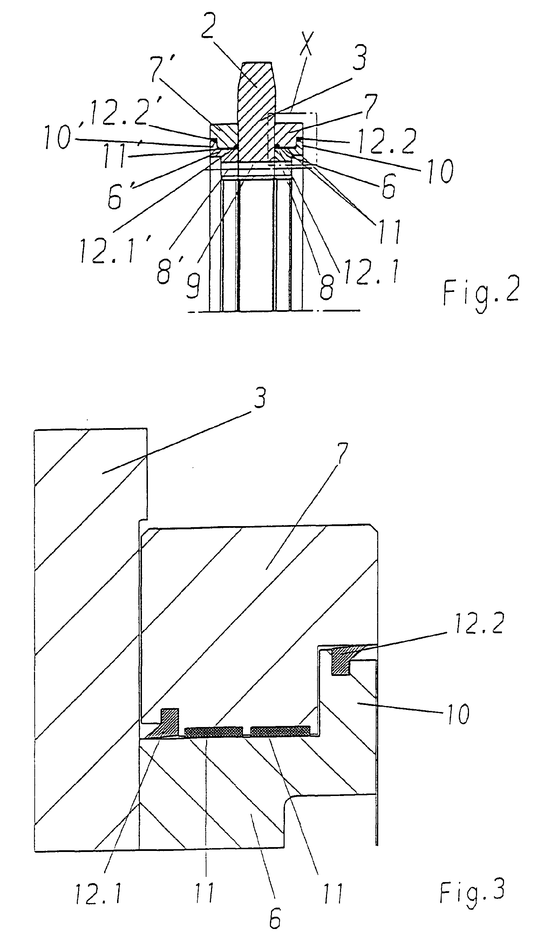

Die Einzelheiten des Antriebsturas sind am besten in den Darstellungen der Figuren 2 und 3 zu erkennen. Erfindungsgemäß besteht jeder Laufkranz aus einem Grundring 6 und einem drehbar darauf gelagerten Drehring 7. In diesem Ausführungsbeispiel ist der Grundring 6,6' lösbar mit dem Zahnkranz 3 verbunden. Sowohl in den beiden Grundringen 6,6' als auch im Zahnkranz 3 ist dafür eine fluchtgleich liegende Bohrung 8,8',9 vorgesehen, durch die eine Schraube steckbar ist. Diese Lösbarkeit ist erforderlich, damit der Drehring 7,7' wegen des Anlaufbundes 10,10' des Grundringes 6,6' montiert werden kann. Die Lagerung des Drehringes 7,7' erfolgt in diesem Ausführungsbeispiel wegen der hohen Flächenbelastung über je zwei Führungsringe 11,11'. Die Führungsringe 11,11' sind vorzugsweise aus einem Gewebeverbundwerkstoff gefertigt und können in einfacher Weise durch Zusammendrücken des Spaltes in einer flachen Ringnut im Drehring 7,7' montiert werden. Damit kein Schmutz in den Lagerbereich gelangen kann, ist sowohl auf der Innenseite wie auf der Außenseite des Drehringes 7,7' je eine Dichtung 12.1,12.1',12.2,12.2' angeordnet.

| Bezugszeichenliste | |
|---|---|
| Nr. | Bezeichnung |
| 1 | Antriebsturas |
| 2 | Kettenzahn |
| 3 | Zahnkranz |
| 4 | Kettenglied der Endloskette |
| 5 | Nockenartiges Element |
| 6,6' | Grundring |
| 7,7' | Drehring |
| 8,8',9 | Bohrung |
| 10,10' | Anlaufbund |
| 11,11' | Führungsring |
| 12.1,12.1' | Dichtung (Innenseite) |
| 12.2,12.2' | Dichtung (Außenseite) |

## Patentansprüche

1. Antriebsturas für ein mehrere Laufrollen und eine Endloskette aufweisendes Raupenfahrwerk insbesondere für Krane, bestehend aus einem am Umfang mit Kettenzähnen versehenen Zahnkranz und zwei auf beiden Seiten des Zahnkranzes angeordneten Laufkränzen, wobei infolge der Durchmesserdifferenz zwischen dem größeren Durchmesser des Fußkreises des Zahnkranzes und dem kleineren Durchmesser der Laufkränze je ein Spurkranz gebildet wird, die mit den Kettengliedern der Endloskette zusammenwirken, wobei jedes Kettenglied zwei symmetrisch zur Mitte und im Abstand voneinander angeordnete, in Laufrichtung liegende Führungsstege aufweist und zwischen beiden Führungsstegen eine die beiden Stege verbindendes tiefer liegendes nockenartiges Element angeordnet ist, das mit den Kettenzähnen des Antriebsturas kämmt,
**dadurch gekennzeichnet,**
**dass** jeder Laufkranz einen mit dem Zahnkranz (3) verbundenen Grundring (6,6') aufweist, auf dem drehbar ein Drehring (7,7') gelagert ist.

2. Antriebsturas nach Anspruch 1,
**dadurch gekennzeichnet,**
**dass** die Lagerung des Drehrings (7,7') als Gleitlager ausgebildet ist.

3. Antriebsturas nach Anspruch 1,
**dadurch gekennzeichnet,**
**dass** die Lagerung des Drehrings (7,7') als Wälzlager ausgebildet ist.

4. Antriebsturas nach Anspruch 3,
**dadurch gekennzeichnet,**
**dass** das Wälzlager ein Nadellager ist.

5. Antriebsturas nach Anspruch 1,
**dadurch gekennzeichnet,**
**dass** die Lagerung des Drehrings (7,7') mindestens einen Führungsring (11,11') aufweist.

6. Antriebsturas nach Anspruch 5,
**dadurch gekennzeichnet,**
**dass** zwei im Abstand voneinander angeordnete Führungsringe (11,11') vorgesehen sind.

7. Antriebsturas nach einem der Ansprüche 1 bis 6,
**dadurch gekennzeichnet,**
**dass** sowohl auf der Innen- als auch auf der Außenseite des Drehringes (7,7') je eine Dichtung (12.1,12.2,12,1';12.2') angeordnet ist.

8. Antriebsturas nach einem der Ansprüche 1 bis 7,
**dadurch gekennzeichnet,**
**dass** der Grundring (6, 6') integraler Bestandteil des Zankranzes (3) ist und der Drehring (7,7') axial durch einen lösbar mit dem Grundring (6, 6') verbundenen Anlaufbund (10, 10') gehalten wird

9. Antriebsturas nach einem der Ansprüche 1 bis 7,
**dadurch gekennzeichnet,**
**dass** der Grundring (6,6') auf der Außenseite einen Anlaufbund (10,10') aufweist, an dem der Drehring (7,7') axial zur Anlage kommt und der Grundring (6,6') lösbar mit dem Zahnkranz (3) verbunden ist.
